# EUROPÄISCHE PATENTSCHRIFT

(11) **EP 0 881 145 B1**
(45) Veröffentlichungstag und Bekanntmachung des Hinweises auf die Patenterteilung: **26.11.2003**
(21) Anmeldenummer: 98109308.1
(22) Anmeldetag: 22.05.1998
(51) Int. Cl.: B64D 11/00, H01R 13/703

(54) **Spannungsversorgungsvorrichtung**
Electrical power supply device
Dispositif d'alimentation électrique

(30) Priorität: 31.05.1997 DE 19722922
(43) Veröffentlichungstag der Anmeldung: 02.12.1998
(73) Patentinhaber: Lufthansa Technik AG, 22335 Hamburg (DE)
(72) Erfinder: Starke, Henry, 25747 Ellerbek (DE); Muirhead, Andrew, 20251 Hamburg (DE)
(74) Vertreter: Selting, Günther, Dipl.-Ing.

(56) Entgegenhaltungen:
- EP-A- 0 498 056
- FR-A- 2 653 944
- "PLESSEY BANKS ON IN-FLIGHT BOREDOM" ELECTRONICS,US,VNU BUSINESS PUBLICATIONS, NEW YORK, Bd. 62, Nr. 8, 1. August 1989 (1989-08-01), Seiten 32A-33A, XP000047513 ISSN: 0883-4989
- LEARMOUNT D: "PASSENGERS ON THE RACK. INFLIGHT ENTERTAINMENT CAN LEAVE PASSENGERS FEELING UNCOMFORTABLE" FLIGHT INTERNATIONAL,GB,REED BUSINESS INFORMATION, HAYWARDS HEATH, Bd. 152, Nr. 4600, 12. November 1997 (1997-11-12), Seiten 65-66, XP000721198 ISSN: 0015-3710

## Beschreibung

Die Erfindung bezieht sich auf eine Spannungsversorgungsvorrichtung zur Bereitstellung einer Versorgungsspannung für elektrische Geräte in einer Flugzeugkabine.

Spannungsversorgungsvorrichtungen in Flugzeugkabinen dienen hauptsächlich dazu, dem Fluggast eine Spannungsversorgung zum Betreiben von elektrischen Geräten zur Verfügung zu stellen, beispielsweise für Computer, Geräte der Unterhaltungselektronik, Ladegeräte etc. Zu diesem Zweck sind im Innenraum der Flugzeugkabine, zumeist im Bereich eines Passagiersitzes oder einer Sitzgruppe, Steckdosen angeordnet, in die der Stecker des elektrischen Gerätes eingesteckt und das Gerät dadurch an eine Versorgungsspannung angeschlossen werden kann, die auf den Stecker aufschaltbar ist.

Beim Versorgen und Betreiben elektrischer Geräte in einem Flugzeug sind zwei Sicherheitsaspekte zu berücksichtigen: Zum einen muss die Sicherheit der Passagiere gewährleistet sein, zum anderen dürfen über das elektrische Gerät keine Störungen in das elektrische Bordnetz des Flugzeuges eingespeist werden. Wegen der Sicherheit der Passagiere wird bei bekannten Spannungsversorgungsvorrichtungen als Versorgungsspannung eine Gleichspannung bis zu 30 V an der Steckdose zur Verfügung gestellt. Nachteilig dabei ist, dass nicht jedes elektrische Gerät mit einer niedrigen Gleichspannung betrieben werden kann. Ferner sind bei derartigen Stromversorgungen spezielle Verbindungskabel erforderlich, mit denen das elektrische Gerät an die Steckdose angeschlossen wird.

Bekannt sind auch Spannungsversorgungsvorrichtungen, von denen Netzspannung für Flugzeugpassagiere bereitgestellt wird, so dass praktisch jedes elektrische Gerät mit seinem Netzstecker angeschlossen werden kann. Die Spannungsversorgung wird über einen Schlüsselschalter an der Steckdose ein- bzw. ausgeschaltet, wobei der entsprechende Schlüssel vom Flugpersonal ausgehändigt wird. Eine Sicherung gegen Gefährdungen von Passagieren durch die Netzspannung ist dabei ebenso wenig gewährleistet, wie eine Sicherung des Flugzeug-Bordnetzes gegen Störungen durch die angeschlossenen elektrischen Geräte.

In FR-A-2 653 944, von der im Oberbegriff des Anspruches 1 ausgegangen wird, ist eine Spannungsversorgungsvorrichtung beschrieben, die eine Steckdose und ein Versorgungsgerät umfasst, das entfernt von der Steckdose angeordnet ist. Die Steckdose und das Versorgungsgerät sind über Signalleitungen für die Signalübertragung und mit Versorgungsleitungen für die Übertragung einer Versorgungsspannung miteinander verbunden. Die Steckdose weist einen Steckerdetektor auf, der die Anwesenheit des Gehäusesteckers an der Steckdose detektiert. Das Detektionssignal des Steckergehäuse-Detektors wird über die Signalleitung an das Versorgungsgerät übertragen, das die Versorgungsspannung über die Versorgungsleitungen auf die Steckdose aufschaltet, wenn die Anwesenheit des Steckers über die Signalleitungen an das Versorgungsgerät gemeldet wird.

Aufgabe der Erfindung ist es demgegenüber, für Flugzeugkabinen eine Spannungsversorgungsvorrichtung zu schaffen, die eine höhere Sicherheit gegen eine fehlerhafte Aufschaltung der Versorgungsspannung auf die Steckdose gewährt.

Diese Aufgabe wird erfindungsgemäß gelöst durch die Merkmale des Anspruchs 1.

Die Steckdose weist einen Steckerdetektor auf, der die Anwesenheit eines in die Steckdose eingesteckten Steckers detektiert. Über eine Signalleitung und über eine Versorgungsleitung für die Versorgungsspannung ist ein Versorgungsgerät mit der Steckdose verbunden, das entfernt von der Steckdose angeordnet ist. Das Versorgungsgerät schaltet die Versorgungsspannung auf die Steckdose auf, wenn der Steckerdetektor die Anwesenheit eines Steckers über die Signalleitung an das Versorgungsgerät meldet.

An der Steckdose steht nur dann eine Versorgungsspannung zur Verfügung, wenn ein Stecker in die Steckdose eingesteckt ist, d.h. es liegt keine Versorgungsspannung an der zweipoligen Steckdose an, solange kein Stecker eines elektrischen Gerätes eingesteckt ist. Dadurch wird eine Gefährdung von Personen durch eine ggf. hohe Versorgungsspannung in der Steckdose bei Nichtgebrauch der Steckdose ausgeschlossen. Auch entsprechende Manipulationen der Steckdose durch Kinder mit Hilfe von Büroklammern, Stricknadeln etc. und daraus entstehende Gefährdungen können damit wirksam verhindert werden. Einer Versorgung der elektrischen Geräte mit Netzspannung stehen daher keine Sicherheitseinwände entgegen.

Durch die getrennte und entfernt voneinander vorgenommene Anordnung des Versorgungsgerätes und der Steckdose kann das ggf. Netzspannung aufweisende Versorgungsgerät entfernt von der eigentlichen Entnahmestelle, nämlich der Steckdose, angeordnet werden. Das Versorgungsgerät kann dadurch so angeordnet werden, daß es keine Gefahrenquelle für den Passagier darstellt. Auf den Leitungen zwischen dem Versorgungsgerät und der Steckdose liegt im Normalfall, also bei Nichtbenutzung der Steckdose, nur eine kleine Signalspannung an, jedoch nicht die Versorgungsspannung. Die Versorgungsleitungen, die an dem Sitz angeordnet sind, führen nur dann Versorgungsspannung, wenn tatsächlich ein elektrisches Gerät angeschlossen ist. Im unbenutzten Zustand sind die Versorgungsleitungen frei von Versorgungsspannung und stellen dann keine Gefahrenquelle für Personen dar.

Der Steckerdetektor ist derart ausgebildet, dass er die Anwesenheit eines Kontaktstiftes des Steckers in der Steckdose detektiert. Auf diese Weise kann zuverlässig ein in die Steckdose eingesteckter Stecker detektiert werden.

Das Versorgungsgerät schaltet die Versorgungsspannung nur dann auf die Steckdose auf, wenn zwei Kontaktstifte des Steckers gleichzeitig detektiert werden. Bei gleichzeitiger Detektion beider Kontaktstifte kann mit hoher Wahrscheinlichkeit davon ausgegangen werden, dass keine Manipulation der Steckdose vorliegt, sondern tatsächlich ein Stecker eingesteckt wurde. Dadurch wird eine höhere Sicherheit gegen Manipulation und ungewolltes Aufschalten der Versorgungsspannung auf die Steckdose erreicht.

In einer bevorzugten Ausgestaltung schaltet das Versorgungsgerät die Versorgungsspannung nur dann auf die Steckdose auf, wenn zwischen der erstmaligen Detektion des ersten und des zweiten Kontaktstiftes eine maximale Kontaktzeit nicht überschritten wird. Es wird also überprüft, ob die beiden Kontaktstifte annähernd zum gleichen Zeitpunkt in die Steckdose hineingesteckt werden. Wird eine zu große Zeitdifferenz zwischen dem Einstecken der zwei Kontaktstifte festgestellt, wird von einer Manipulation der Steckdose ausgegangen. In diesem Fall wird keine Versorgungsspannung auf die Steckdose aufgeschaltet, so dass eine Gefährdung einer Person ausgeschlossen ist.

In einer bevorzugten Ausgestaltung weist der Steckerdetektor mechanische Schalter auf, die durch die eingesteckten Kontaktstifte betätigt werden. Dadurch wird eine einfache und zuverlässige Detektion der Kontaktstifte gewährleistet.

Vorzugsweise weist der Steckerdetektor einen Gehäusedetektor auf, der die Anwesenheit eines Steckergehäuses des Steckers an der Steckdose detektiert. Nur wenn das Steckergehäuse nahe genug, d.h. näher als ein vorbestimmter Abstandswert, an die Steckdose angenähert ist, wird das eingesteckte Steckergehäuse detektiert. Damit liegt ein alternatives oder weiteres zusätzliches Kriterium für die Detektion des Steckers an der Steckdose vor. Die Steckdose ist mit großer Sicherheit gegen Manipulation gesichert und es wird nur dann Versorgungsspannung auf die Steckdose aufgeschaltet, wenn tatsächlich ein Steckergehäuse an der Steckdose vorhanden ist.

In einer bevorzugten Ausgestaltung ist der Gehäusedetektor ein optischer Reflexionssensor, der einen Mindestabstand des Steckergehäuses zur Steckdose detektiert. Der Reflexionssensor kann so angeordnet sein, dass er die Stirnseite des Steckers detektiert, wenn sie einen Mindestabstand zum Steckergehäuse unterschreitet.

Vorzugsweise schaltet das Versorgungsgerät die Versorgungsspannung nur dann auf die Steckdose auf, wenn sowohl der Steckerdetektor als auch der Gehäusedetektor die Anwesenheit des Steckers melden. Dadurch kann eine Manipulation, also ein Vortäuschen eines eingesteckten Steckers nahezu ausgeschlossen werden.

In einer bevorzugten Ausgestaltung ist für die Spannungsversorgung der Versorgungsgeräte eine zentrale Spannungsquelle vorgesehen, wobei die Spannungsquelle durch ein Steuersignal abschaltbar ist. Dieses Steuersignal kann beispielsweise vom Flugpersonal oder automatisch ausgelöst werden. Dadurch ist in Situationen, in denen eine hohe Störsicherheit gefordert ist, ein sofortiges und zuverlässiges Abschalten aller elektrischen Geräte möglich.

Im folgenden wird unter Bezugnahme auf die Zeichnungen eine Ausführungsform der Erfindung näher erläutert.

Es zeigen:
- Fig. 1: eine Seitenansicht eines Passagiersitzes mit einer Spannungsversorgungsvorrichtung, einschließlich des Versorgungsgerätes und der Steckdose,
- Fig. 2: den Passagiersitz der Fig. 1 in Draufsicht, mit einem angeschlossenen elektrischen Gerät,
- Fig. 3: ein Schaltbild des Versorgungsgerätes und der Steckdose,
- Fig. 4: eine Draufsicht auf die Stirnseite der Steckdose, und
- Fig. 5: ein Schaltbild mehrerer Versorgungsgeräte mit einer Spannungsquelle.

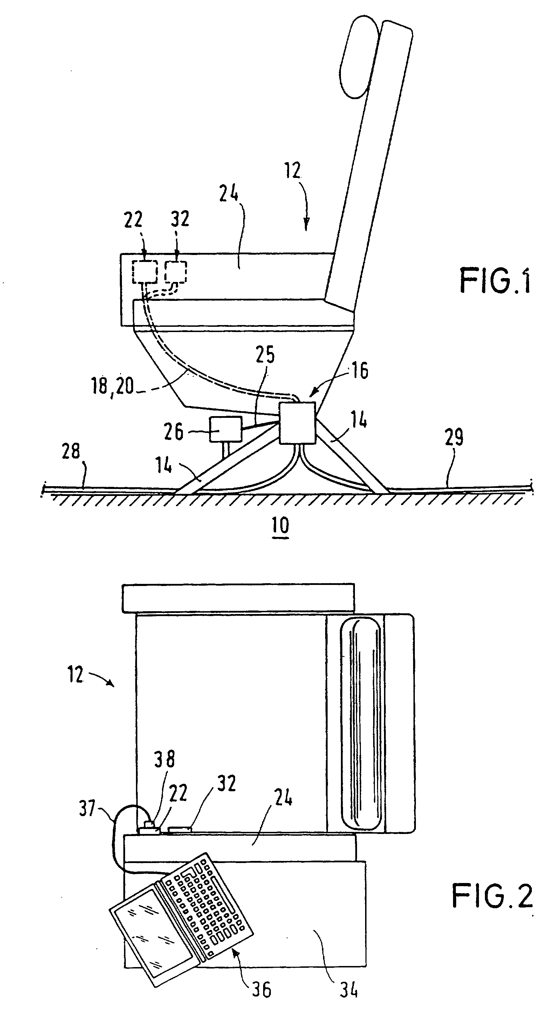

In den Figuren 1 und 2 ist ein Passagiersitz 12 mit einer Spannungsversorgungsvorrichtung für den Betrieb elektrischer Geräte eines Passagiers dargestellt. Der Passagiersitz 12 ist auf einem Kabinenboden 10 einer Flugzeugkabine befestigt und weist ein Bodengestell 14 auf, an dem ein Versorgungsgerät 16 lösbar montiert ist. Das Versorgungsgerät 16 ist über eine Signalleitung 18 und eine zweiadrige Versorgungsleitung 20 mit einer Steckdose 22 in der linken Armlehne 24 des Passagiersitzes 12 verbunden. Das Versorgungsgerät 16 und die Steckdose 22 sind jeweils in eigenen Gehäusen untergebracht. Über eine weitere Signalleitung 25 ist das Versorgungsgerät 16 lösbar mit einem fest mit dem Sitz 12 verbundenen Sitzmeldegerät 26 verbunden, das an das Versorgungsgerät 16 eine fest gespeicherte Sitzidentifikation liefert. In der Armlehne 24 ist ferner eine Anzeigevorrichtung 32 zur Anzeige des Betriebszustandes des Versorgungsgerätes 16 angeordnet.

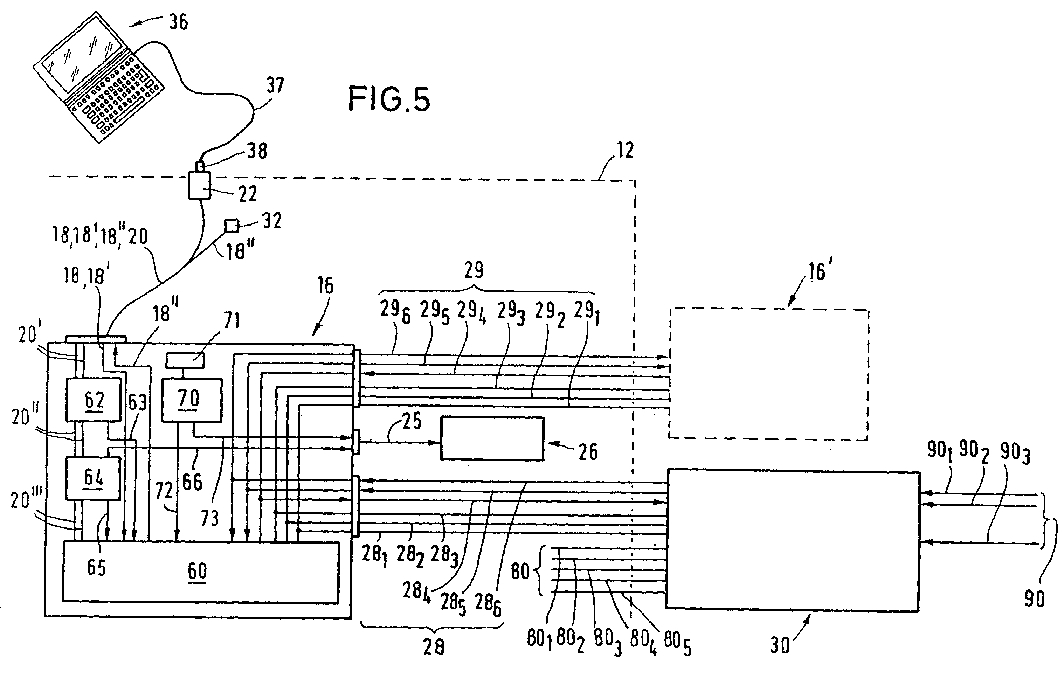

Das Versorgungsgerät 16 ist mit einem in das Versorgungsgerät 16 eingeführten ankommenden Versorgungskabel 28 mit einer zentralen, mehrere Versorgungsgeräte versorgenden Spannungsquelle 30, verbunden (siehe Figur 5). Über ein aus dem Versorgungsgerät 16 herausgeführtes abgehendes Versorgungskabel 29 ist das Versorgungsgerät eines nachfolgenden Passagiersitzes angeschlossen.

In Figur 2 ist beispielhaft seitlich der linken Armlehne 24 des Passagiersitzes 12 ein Tisch 34 befestigt, auf dem als elektrisches Gerät ein tragbarer Computer 36 liegt. Der Computer 36 weist ein Netzkabel 37 mit einem Stecker 38 auf, der in die Steckdose 22 eingesteckt ist.

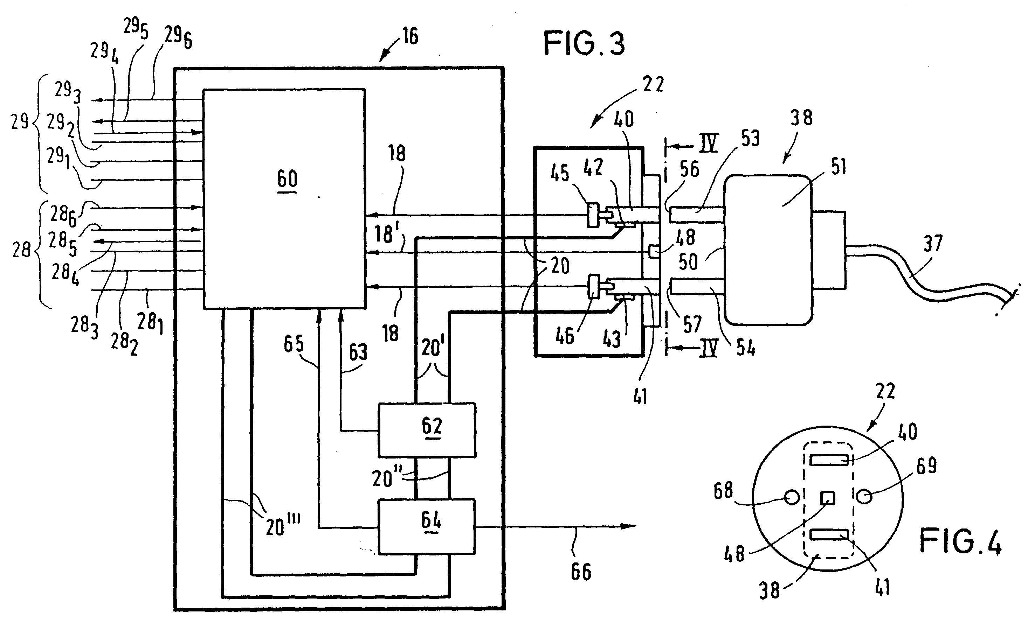

In der Figur 3 ist schematisch das Versorgungsgerät 16 mit der Steckdose 22 und dem Stecker 38 dargestellt. Die Steckdose 22 weist zwei zusammengehörende Stecklöcher 40,41 auf, an deren Innenseiten jeweils ein Kontaktelement 42,43 angeordnet ist. Die Kontaktelemente 42,43 werden durch die beiden Versorgungsleitungen 20 von dem Versorgungsgerät 16 mit einer Netzspannung von 110 V bei einer Netzfrequenz von 60 Hz versorgt, sobald die unten beschriebenen Sicherheitsbedingungen erfüllt sind. Diese Spannung kann jedoch auch einen anderen Wert haben, beispielsweise 230 V bei 50 Hz. Ferner sind in der Steckdose 22 an dem Boden jedes Steckloches 40,41 als Steckerdetektoren jeweils Mikroschalter 45,46 angeordnet, die jeweils über eine Signalleitung 18 mit dem Versorgungsgerät 16 verbunden sind.

An der Stirnseite der Steckdose 22 ist als Gehäusedetektor ein optischer Infrarot-Reflexionssensor 48 angeordnet. Der Reflexionssensor 48 besteht aus einer Infrarotstrahlung aussendenden Leuchtdiode und einer Empfängerdiode. Bei Unterschreitung eines bestimmten Mindestabstandes der Stirnseite 50 des Gehäuses 51 des Steckers 38 werden die von der Leuchtdiode ausgesandten Strahlen von der Gehäuse-Stirnseite 50 des Steckers 22 reflektiert und von der Empfängerdiode empfangen. Damit kann durch den Reflexionssensor 48 detektiert werden, ob ein Steckergehäuse 51 an der Steckdose 22 vorhanden ist.

Beim Einstecken der beiden Kontaktstifte 53,54 des Steckers 38 in die Stecklöcher 40,41 der Steckdose 22 sind die beiden Kontaktstifte 53,54 in Kontakt mit den Kontaktelementen 42,43. Ferner betätigen die freien Enden 56,57 der Kontaktstifte 53,54 die beiden Mikroschalter 45,46, so dass durch die Mikroschalter 45,46 über die Signalleitungen 18 das Einstecken der reflektiert und von der Empfängerdiode empfangen. Damit kann durch den Reflexionssensor 48 detektiert werden, ob ein Steckergehäuse 51 an der Steckdose 22 vorhanden ist.

Beim Einstecken der beiden Kontaktstifte 53,54 des Steckers 38 in die Stecklöcher 40,41 der Steckdose 22 sind die beiden Kontaktstifte 53,54 in Kontakt mit den Kontaktelementen 42,43. Ferner betätigen die freien Enden 56,57 der Kontaktstifte 53,54 die beiden Mikroschalter 45,46, so daß durch die Mikroschalter 45,46 über die Signalleitungen 18 das Einstecken der Kontaktstifte 53,54 in die Steckdose 22 von dem Versorgungsgerät 16 detektiert werden kann. Der Reflexionssensor 48 ist über eine Signalleitung 18' ebenfalls mit dem Versorgungsgerät 16 verbunden.

In dem Versorgungsgerät 16 ist eine Steuer- und Kontrolleinheit 60 vorgesehen, die mit den Leitungen der Versorgungskabel 28,29 verbunden ist. Als Eingänge weist sie die Signalleitungen 18,18' des Steckers 22, sowie weitere Signalleitungen 63,65 eines Kurzschlußdetektors 62 und eines Leitungsüberwachungsdetektors 64 auf, die ebenfalls in dem Versorgungsgerät 16 vorgesehen sind.

Die Steuer- und Kontrolleinheit 60 enthält ferner einen Spannungsschalter, mit dem die Versorgungsspannung von 110 V, 60 Hz auf die internen Versorgungsleitungen 20''' geschaltet werden kann. Die Versorgungsleitungen 20''' verbinden die Steuer- und Kontrolleinheit 60 mit dem Leitungsüberwachungsdetektor 64, der über zwei weiterführende Versorgungsspannungsleitungen 20'' mit dem Kurzschlußdetektor 62 verbunden ist. Die Ausgangsseite des Kurzschlußdetektors 62 ist über zwei Versorgungsspannungsleitungen 20' und über die anschließenden Versorgungsleitungen 20 mit den Kontaktelementen 42,43 der Steckdose 22 verbunden.

Bei Betrieb der Steckdose 22, d.h. wenn die Steuer- und Kontrolleinheit 60 über die Versorgungsleitungen 20 die Versorgungsspannung auf die Steckdose 22 aufgeschaltet hat, fallen dem Kurzschlußdetektor 62 und dem Leitungsüberwachungsdetektor 64 umfangreiche elektrische Überwachungsfunktionen zu. In dem Kurzschlußdetektor 62 wird zum einen eine Strombegrenzung der Spannungsversorgung auf ungefähr 100 W vorgenommen. Dadurch wird eine Überlastung des Versorgungsgerätes 16 verhindert. Ferner wird bei einer starken Überlastung ein Überlastungssignal über die Signalleitung 63 von dem Kurzschlußdetektor an die Steuer- und Kontrolleinheit 60 ausgegeben. Die zweite Funktion des Kurzschlußdetektors 62 ist die Fehlerstromdetektion. Überschreitet die Differenz des in den beiden Spannungsversorgungsleitungen 20' fließenden elektrischen Stromes einen vorbestimmten Wert, so wird über die Signalleitung 63 ein entsprechendes Signal an die Steuer- und Kontrolleinheit 60 ausgegeben, von der die Spannungsversorgung daraufhin abgeschaltet wird. Beide Kontrollfunktionen des Kurzschlußdetektors 62 dienen also der Feststellung elektrischer Störungen, die durch das elektrische Gerät 36 oder ggf. Manipulationen verursacht werden.

Der Leitungsüberwachungsdetektor 64 enthält ein Netzfrequenzfilter, das hochfrequente Störsignale aus den Versorgungsleitungen 20,20',20 " herausfiltert. Gleichzeitig wird das Auftreten derartiger störender Frequenzen durch den Leitungsüberwachungsdetektor 64 detektiert und über die Signalleitung 65 an die Steuerund Kontrolleinheit 60 gemeldet. Gefiltert und detektiert werden insbesondere die Frequenzen, die für den sicheren Betrieb eines Flugzeuges freigehalten werden müssen. Diese Frequenzen sind in der Norm RTCA DO 160-D festgelegt. Der Leitungsüberwachungsdetektor 64 verhindert also die Einleitung von elektromagnetischen Störsignalen in das Bordnetz des Flugzeuges, die von dem elektrischen Gerät 36 des Passagiers über das Netzkabel eingeleitet werden.

Figur 4 zeigt die Einsteckseite der runden Steckdose 22, bei der in der Mitte der Reflexionssensor 48, die zwei Stecklöcher 40,41 für Stecker nach der US-amerikanischen Steckernorm, und zwei weitere Stecklöcher 68,69 für Netzstecker der europäischen Norm vorgesehen sind. Die jeweiligen Steckerlochpaare 40,41, 68,69 sind rechtwinklig zueinander angeordnet, so daß sowohl ein Stecker 38 der US-Norm als auch ein Stecker der europäischen Norm jeweils den mittleren Bereich der Steckdose abdecken, in dem der Reflexionssensor 48 angeordnet ist. Auch die Steckerlöcher 68,69 für europäische Stecker weisen jeweils ein Kontaktelement und einen Mikroschalter auf, die an die jeweiligen Signalund Versorgungsleitungen 18,18',20 der anderen Steckerlöcher 40,41 angeschlossen sind. Es kann jedoch auch für die Steckerlöcher 68,69 für europäische Stecker eine zweite getrennte Spannungsversorgung mit 230V, 50 Hz vorgesehen sein. Ferner können die Steckerlochpaare auch nicht rechtwinklig zueinander angeordnet sein, sondern sich einander überlagern, wobei dann die Mikroschalter seitlich der Stecklöchern angeordnet sind.

Figur 5 zeigt eine Gesamtdarstellung einer Vorrichtung zur Spannungsversorgung für elektrische Geräte. Das Versorgungsgerät 16 umfaßt neben den in der Figur 3 bereits beschriebenen Vorrichtungen noch einen Empfängerdetektor 70, der eine Antenne 71 aufweist. Mit dem Empfängerdetektor werden elektromagnetische Wellen bestimmter Frequenzen, die in der Norm RTCA DO 160-D genannt sind, detektiert. Auf diese Weise können elektromagnetische Störungen im Raum detektiert werden, die durch netzunabhängige, akku- oder netzbetriebene elektrische Geräte verursacht werden, beispielsweise durch Mobiltelefone, CD-Player etc.

Sowohl der Leitungsüberwachungsdetektor 64 als auch der Empfängerdetektor 70 sind über eine jeweilige Signalleitung 66,73 und über die Signalleitung 25 mit dem Sitzmeldegerät 26 verbunden. Das Sitzmeldegerät 26 liefert über eigene vorhandene Signalleitungen ein Signal an ein Zentralgerät (oder Sitzmeldegerät), so daß bei Auftreten entsprechender elektromagnetischer Störungen eine Lokalisierung der Störungen durch eine Anzeige möglich ist.

Über eine weitere Signalleitung 18'' ist die Steuerund Kontrolleinheit 60 mit der Anzeigevorrichtung 32 in der Armlehne 24 verbunden. Die Steuer- und Kontrolleinheit 60 gibt Informationssignale an die Anzeigevorrichtung aus, die den Passagier über den Status der Steuerund Kontrolleinheit 60 informiert. Die Anzeigevorrichtung weist eine rote und eine grüne Leuchtdiode auf, die den Betriebszustand des Versorgungsgerätes 16 anzeigen: Wenn keine der beiden Leuchtdioden leuchtet, ist das Versorgungsgerät 16 abgeschaltet. Wenn die rote Leuchtdiode kontinuierlich leuchtet, so wird damit angezeigt, daß das Versorgungsgerät 16 zwar in Betrieb ist, jedoch an der Steckdose 22 keine Versorgungsspannung angefordert werden kann, da beispielsweise die zentrale Spannungsquelle 30 sonst überlastet würde. Die blinkende rote Leuchtdiode zeigt eine Störung durch elektromagnetische Wellen an, die entweder von dem Leitungsüberwachungsdetektor 64 oder dem Empfängerdetektor 70 gemeldet wurde. Die blinkende grüne Leuchtdiode zeigt an, daß die Spannungsversorgung an der Steckdose 22 in Kürze, beispielsweise nach ungefähr 60 Sekunden, abgeschaltet wird. Der Benutzer hat dann noch genügend Zeit, sein elektrisches Gerät, beispielsweise den Computer 36, kontrolliert abzuschalten. Die kontinuierlich leuchtende grüne Leuchtdiode zeigt den uneingeschränkten Betrieb der Spannungsversorgung 16 an.

Das Versorgungsgerät 16 ist über das vordere Versorgungskabel 28 mit der zentralen Spannungsquelle 30 verbunden, und über das hintere Versorgungskabel 29 mit einem weiteren Versorgungsgerät 16' eines nachfolgenden Sitzes. Die sechs Leitungen der Versorgungskabel 28,29 umfassen jeweils drei Leitungen 28₁,28₂,28₃,29₁,29₂,29₃ für die Versorgungsspannung von 110 V, 60 Hz und für Masse. Ferner weist jedes Versorgungskabel 28,29 drei Signalleitungen 28₄,28₅,28₆,29₄,29₅,29₆ auf, über die analoge Signale von der Spannungsquelle 30 an die Versorgungsgeräte 16,16' bzw. umgekehrt übertragen werden.

Über eine Steuerleitung 28₄,29₄ wird von der Steuerund Kontrolleinheit 60 eines Versorgungsgerätes 16,16' bei Auftreten einer Betriebsstörung durch elektromagnetische Störsignale, Kurzschluß, Fehlerstrom etc. ein Signal ausgegeben, das von der zentralen Spannungsquelle 30 empfangen und entsprechend verarbeitet wird. Über eine weitere Signalleitung 28₅,29₅ gibt die Spannungsquelle 30 ein Freigabesignal an die Versorgungsgeräte 16,16' aus, solange eine bestimmte elektrische Höchstbelastung der Spannungsquelle 30 nicht erreicht ist. Wird diese Höchstbelastung erreicht, so wird über die genannte Signalleitung 28₅,29₅ ein Sperrsignal an alle Versorgungsgeräte 16 ausgegeben, so daß keine weiteren elektrischen Geräte 36 durch die Versorgungsgeräte 16,16' mit Versorgungsspannung versorgt werden können. Erst wenn durch eine Lastverminderung, beispielsweise durch Ausschalten eines elektrischen Gerätes 36 die Höchstbelastung wieder unterschritten wird, übermittelt die Spannungsquelle 30 über die genannten Signalleitungen 28₅,29₅ ein Freigabesignal, so daß an allen Versorgungsgeräten 16 wieder Spannung angefordert und auf das elektrische Gerät 36 geschaltet werden kann.

Über die verbleibenden Signalleitungen 28₆,29₆ wird von der zentralen Spannungsquelle 30 das "Fasten seat belts"-Signal ausgegeben, so daß die Versorgungsgeräte 16,16' über ihre Anzeigevorrichtungen 32 signalisieren können, daß die Spannungsversorgung bald abgeschaltet wird. Dadurch wird der Benutzer der Spannungsversorgung in die Lage versetzt, sein elektrisches Gerät, das an die Spannungsversorgung angeschlossen ist, kontrolliert abzuschalten.

Die Spannungsquelle 30 wird über ein Versorgungskabel 80, das fünf Versorgungsleitungen 80₁-80₅ umfaßt, gespeist. Die fünf Leitungen 80₁-80₅ bestehen aus vier Leitungen, über die die typische Bordspannung von 115 V, 400 Hz zugeführt wird, sowie einer Masseleitung. Die Bordspannung von 115 V und 400 Hz wird von der Spannungsquelle 30 in Netzspannung von 110 V und 60 Hz umgeformt und über einen Spannungsschalter auf die Versorgungsleitungen 28₁-28₃,29₁-29₃ aufgeschaltet.

Ferner weist die Spannungsquelle 30 drei Eingangssignalleitungen 90 auf, über die die Spannungsquelle 30 zentral gesteuert werden kann. Über eine Signalleitung 90₁ wird das "Fasten seat belts"- Signal an die Spannungsquelle 30 übertragen. Im "Fasten seat belts"-Modus wird nach einer Verzögerung von beispielsweise 60 Sekunden, die ein kontrolliertes Abschalten der angeschlossenen Geräte erlaubt, die Spannungsversorgung für die Versorgungsgeräte 16 abgeschaltet, um einen sicheren und störungsfreien Flugbetrieb, z.B. bei Start und Landung zu gewährleisten.

Über eine zweite Steuerleitung 90₂ kann eine Notausschaltung der gesamten Spannungsversorgungsvorrichtung vorgenommen werden. Wird ein entsprechender Schalter betätigt und ein entsprechendes Signal über die genannte Signalleitung 90₂ an die Spannungsquelle 30 übertragen, so schaltet diese sofort die Spannungsversorgung für alle Versorgungsgeräte 16 ab.

Über die dritte Signalleitung 90₃ wird die Spannungsquelle 30 aus dem Betriebsmodus in den Testmodus geschaltet. Im Testmodus, der auch nach jedem Einschalten der Spannungsquelle 30 vorliegt, jedoch auch zu jedem anderen beliebigen Zeitpunkt ausgelöst werden kann, wird die gesamte Spannungsversorgungsvorrichtung getestet, wobei die elektrischen Eigenschaften der Spannungsquelle 30 und der angeschlossenen Versorgungsgeräte 16 gestet werden. Nach einem fehlerfreien Durchlaufen des Systemtests wird die Versorgungsspannung für die Versorgungsgeräte 16,16' durch die Spannungsquelle 30 freigeschaltet.

Nach dem Einschalten der Spannungsquelle 30 und dem folgenden Systemtest wird durch einen Spannungsschalter in der Spannungsquelle 30 die Versorgungsspannung auf die Versorgungsleitungen 28,29 aufgeschaltet, so daß alle angeschlossenen Versorgungsgeräte 16,16' mit der Versorgungsspannung versorgt werden.

Bei Einstecken der Kontaktstifte 53,54 eines Steckers 38 eines elektrischen Gerätes 36 werden die Mikroschalter 45,46 von den eingesteckten. Kontaktstiften 40,41 betätigt. Zwischen der erstmaligen Betätigung des einen Kontaktschalters 45 und der des anderen Kontaktschalters 46 wird von der Steuer- und Kontrolleinheit 60 eine Kontaktzeit ermittelt. Liegt diese Kontaktzeit unterhalb eines Maximalwertes, so wird eine entsprechende Freigabeinformation in der Steuer- und Kontrolleinheit 60 gespeichert. Ferner wird von der Steuer- und Kontrolleinheit 60 der Status des Reflexionssensors 48 abgefragt. Ist das Steckergehäuse 51 mit seiner Stirnseite 50 nahe genug an dem Reflexionssensor 48, so wird ein entsprechendes Signal an die Steuer- und Kontrolleinheit 60 ausgegeben. Bei Vorliegen des Reflexionssensor-Signales und der Freigabeinformation schaltet die Steuer- und Kontrolleinheit 60 über einen internen Spannungsschalter die Versorgungsspannung auf die Versorgungsleitung 20, so daß die Kontaktstifte 53,54 über die Kontaktelemente 42,43 mit der Netzspannung versorgt werden.

Wenn so viele elektrische Geräte 36 an Versorgungsgeräte 16,16' angeschlossen sind, daß ein festgelegter Leistungsgrenzwert von 3500 Watt überschritten wird, gibt die Spannungsquelle 30 über die ansprechende Signalleitung 28₅,29₅ ein Sperrsignal an alle Versorgungsgeräte 16 aus, das eine Sperre für die Versorgung weiterer elektrischer Geräte bewirkt. Diese Sperre wird entsprechend durch die Anzeigevorrichtung 32 in der Armlehne 24 angezeigt.

Im Normallfall wird die Spannungsversorgung für die Versorgungsgeräte 16,16' durch die Spannungsquelle 30 nach der Startphase des Flugzeuges freigeschaltet. Die Spannungsquelle kann vom Cockpit aus über die "Fasten seat belts"-Schaltung mit einer Verzögerung von 60 Sekunden oder über einen Notausschalter sofort abgeschaltet werden. Bei einer "Fasten seat belts"-Abschaltung wird die bevorstehende Spannungsabschaltung von der Anzeigevorrichtung 32, beispielsweise durch eine blinkende Leuchtdiode, angezeigt, so daß der Benutzer sein elektrisches Gerät, beispielsweise einen Computer, kontrolliert abschalten kann.

Die Spannungsversorgungsvorrichtung erfüllt durch die beschriebenen Sicherheitselemente sowohl hohe Anforderungen an die Sicherheit von Personen vor' Netzspannungen, als auch an die Sicherheit des Bordnetzes vor Einleitung von Störungen durch elektrische Geräte. Damit wird auf einem hohen Sicherheitsniveau ein erheblicher Komfort- und Servicegewinn für den Passagier erreicht. Durch die mögliche Detektion netzunabhängiger elektrischer Geräte wird ein zusätzlicher Sicherheitsgewinn erzielt.

## Patentansprüche

1. Spannungsversorgungseinrichtung zur Bereitstellung einer Versorgungsspannung für elektrische Geräte (36) in einer Flugzeugkabine, mit
einer Steckdose (22), an die das Gerät (36) mit einem Stecker (38) anschließbar und auf die die Versorgungsspannung aufschaltbar ist,
wobei die Steckdose (22) einen Steckerdetektor (45,46) aufweist, der die Anwesenheit eines in die Steckdose (22) eingesteckten Steckers (38) detektiert,
wobei ein entfernt von der Steckdose (22) angeordnetes Versorgungsgerät (16) vorgesehen ist, das über eine Signalleitung (18) und über eine Versorgungsleitung (20) für die Versorgungsspannung mit der Steckdose (22) verbunden ist, und
wobei das Versorgungsgerät (16) die Versorgungsspannung auf die Steckdose (22) aufschaltet, wenn der Steckerdetektor (45,46) die Anwesenheit des Steckers (38) über die Signalleitung (18) an das Versorgungsgerät (16) meldet,
**dadurch gekennzeichnet ,**
**dass** der Steckerdetektor (45,46) derart ausgebildet ist, dass er die Anwesenheit von zwei Kontaktstiften (53,54) des Steckers (38) in der Steckdose (22) detektiert, und
**dass** das Versorgungsgerät (16) die Versorgungsspannung nur dann auf die Steckdose (22) aufschaltet, wenn die Anwesenheit von zwei Kontaktstiften (53,54) des Steckers (38) gleichzeitig detektiert wird.

2. Spannungsversorgungsvorrichtung nach Anspruch 1, **dadurch gekennzeichnet, dass** das Versorgungsgerät (16) die Versorgungsspannung nur dann aufschaltet, wenn zwischen der Detektion des ersten und des zweiten Kontaktstiftes (53,54) des Steckers (38) eine maximale Kontaktzeit nicht überschritten wird.

3. Spannungsversorgungsvorrichtung nach Anspruch 1 oder 2, **dadurch gekennzeichnet, dass** der Steckerdetektor mechanische Schalter (45,46) aufweist, die durch die eingesteckten Kontaktstifte (53,54) des Steckers betätigt werden.

4. Spannungsversorgungsvorrichtung nach einem der Ansprüche 1-3, **dadurch gekennzeichnet, dass** die Steckdose (22) einen Gehäusedetektor (48) aufweist, der die Anwesenheit des Steckergehäuses (51) des Steckers (38) an der Steckdose (22) detektiert.

5. Spannungsversorgungsvorrichtung nach Anspruch 4, **dadurch gekennzeichnet, dass** der Gehäusedetektor (48) ein optischer Reflexionssensor ist, der einen Mindestabstand des Steckergehäuses (51) zur Steckdose (22) detektiert.

6. Spannungsversorgungsvorrichtung nach Anspruch 4 oder 5, **dadurch gekennzeichnet, dass** das Versorgungsgerät (16) die Versorgungsspannung nur dann auf die Steckdose (22) aufschaltet, wenn der Steckerdetektor (45,46) die Anwesenheit der Kontaktstifte (53,54) und der Gehäusedetektor (48) die Anwesenheit des Steckergehäuses (51) melden.

7. Spannungsversorgungsvorrichtung nach einem der Ansprüche 1-6, mit mehreren Versorgungsgeräten (16) und einer zentralen Spannungsquelle (30), die die Spannungsversorgung der Versorgungsgeräte (16) bildet, wobei die Spannungsquelle (30) durch ein Steuersignal abschaltbar ist.

## Claims

1. A voltage supply apparatus for providing a supply voltage for electric devices (36) in an aeroplane cabin, comprising
a socket (22) to which the device (36) is connectable by means of a plug (38) and to which the supply voltage can be applied,
the socket (22) comprising a socket detector (45, 46, 48) detecting the presence of a plug (38) inserted in the socket (22), and
a supply device (16) being provided remotely from the socket (22) and being connected to the socket (22) via a signal line (18) and via a supply line (20) for the supply voltage,
the supply device (16) applying the supply voltage to the socket (22) when the plug detectors (45, 46, 48) indicate the presence of the plug (38) via the signal line (18) to the supply device (16).
**characterized in that**
the plug detector (45, 46) is formed such as to detect the presence of two contact pins (53, 54) of the plug (38) in the socket (22), and
the supply device (16) only applies the supply voltage to the socket (22) if the presence of two contact pins (53, 54) of the plug (38) is detected simultaneously.

2. The voltage supply apparatus according to claim 1, wherein the supply device (16) only applies the supply voltage if a maximum contact time is not exceeded between the detection of the first and the second contact pin (53, 54) of the plug (38).

3. The voltage supply apparatus according to claim 1 or 2, wherein the plug detector comprises mechanical switches (45, 46) activated by the inserted contact pins (53, 54) of the plug (38).

4. The voltage supply apparatus according to one of claims 1 - 3, wherein the plug (22) comprises a casing detector (48) detecting the presence of the plug casing (51) of the plug (38) at the socket (22).

5. The voltage supply apparatus according to claim 4, wherein the casing detector (48) is an optical reflection sensor detecting a minimum distance of the plug casing (51) to the socket (22).

6. The voltage supply apparatus according to claim 4 or 5, wherein the supply device (16) applies the supply voltage to the socket (22) only if the plug detector (45, 46) indicates the presence of the contact pins (53, 54) and the casing detector (48) indicates the presence of the plug casing (51).

7. The voltage supply apparatus according to one of claims 1-6, wherein a plurality of supply devices (16) and a central voltage source (30) are provided for the voltage supply of the supply devices (16), the voltage source (30) being able to be deactivated by a control signal.

## Revendications

1. Dispositif d'alimentation électrique permettant de mettre à disposition une tension d'alimentation pour des appareils électriques (36) dans la cabine d'un avion, comportant
une prise de courant (22) à laquelle peut être connecté l'appareil (36) à l'aide d'une fiche (38) et au niveau de laquelle la tension d'alimentation peut être appliquée,
la prise de courant (22) présentant un détecteur de fiche (45, 46) qui détecte la présence d'une fiche (38) enfichée dans la prise de courant (22),
un appareil d'alimentation (16) disposé à l'écart de la prise de courant (22) et relié à la prise de courant (22) par l'intermédiaire d'une ligne de transmission de signaux (18) et par l'intermédiaire d'une ligne d'alimentation (20) pour la tension d'alimentation, et
l'appareil d'alimentation (16) appliquant la tension d'alimentation au niveau de la prise de courant (22) lorsque le détecteur de fiche (45, 46) signale à l'appareil d'alimentation (16) la présence de la fiche (38) par l'intermédiaire de la ligne de transmission de signaux (18),
**caractérisé en ce que**
le détecteur de fiche (45, 46) est configuré de telle sorte qu'il détecte la présence de deux broches (53, 54) de la fiche (38) dans la prise de courant (22), et
**en ce que** l'appareil d'alimentation (16) n'applique la tension d'alimentation au niveau de la prise de courant (22) que lorsque la présence de deux broches (53, 54) de la fiche (38) est détectée simultanément.

2. Dispositif d'alimentation électrique selon la revendication 1, **caractérisé en ce que** l'appareil d'alimentation (16) n'applique la tension d'alimentation que lorsqu'une durée de contact maximale n'a pas été dépassée entre la détection de la première et de la deuxième broche (53, 54) de la fiche (38).

3. Dispositif d'alimentation électrique selon la revendication 1 ou 2, **caractérisé en ce que** le détecteur de fiche présente des commutateurs mécaniques (45, 46), qui sont actionnés par les broches (53, 54) enfichées de la fiche.

4. Dispositif d'alimentation électrique selon l'une des revendications 1 à 3, **caractérisé en ce que** la prise de courant (22) présente un détecteur de boîtier (48) qui détecte la présence du boîtier de fiche (51) de la fiche (38) au niveau de la prise de courant (22).

5. Dispositif d'alimentation électrique selon la revendication 4, **caractérisé en ce que** le détecteur de boîtier (48) est un capteur à réflexion optique qui détecte une distance minimale entre le boîtier de fiche (51) et la prise de courant (22).

6. Dispositif d'alimentation électrique selon la revendication 4 ou 5, **caractérisé en ce que** l'appareil d'alimentation (16) n'applique la tension d'alimentation au niveau de la prise de courant (22) que lorsque le détecteur de fiche (45, 46) signale la présence des broches de contact (53, 54) et que le détecteur de boîtier (48) signale la présence du boîtier de fiche (51) .

7. Dispositif d'alimentation électrique selon l'une des revendications 1 à 6, comportant plusieurs appareils d'alimentation (16) et une source de courant centrale (30) qui forme l'alimentation en tension des appareils d'alimentation (16), la source de courant (30) pouvant être coupée par un signal de commande.
